Europäisches Patentamt

European Patent Office

Office européen des brevets

(11) Publication number: **0 162 646**
**B1**

(12) **EUROPEAN PATENT SPECIFICATION**

(45) Date of publication of patent specification: **07.11.90**

(21) Application number: **85303348.8**

(22) Date of filing: **13.05.85**

(51) Int. Cl.⁵: **G 01 S 13/60, G 01 S 15/60**

(54) **Ground speed sensor.**

(30) Priority: **14.05.84 US 609626**

(43) Date of publication of application:
**27.11.85 Bulletin 85/48**

(45) Publication of the grant of the patent:
**07.11.90 Bulletin 90/45**

(84) Designated Contracting States:
**AT BE DE FR GB IT NL SE**

(56) References cited:
**WO-A-83/01120**
**DE-A-3 017 480**
**FR-A-2 354 565**
**US-A-3 021 521**
**US-A-3 896 788**

**NASA CONTRACTOR REPORT, no. 1776,**
**October 1971, pages 1-114, Washington, D.C.,**
**US; W.D. STANLEY: "Doppler radar simulation**
**studies"**

(73) Proprietor: **DEERE & COMPANY**
**1 John Deere Road**
**Moline, Illinois 61265 (US)**

(72) Inventor: **Phelan, James Joseph**
**5275 Crestview Heights Drive**
**Bettendorf Iowa 52722 (US)**

(74) Representative: **Pears, David Ashley et al**
**REDDIE & GROSE 16 Theobalds Road**
**London WC1X 8PL (GB)**

(56) References cited:
**IEEE TRANSACTIONS ON AEROSPACE AND**
**ELECTRONIC SYSTEMS, vol. AES-10, no. 4, July**
**1974, pages 418-428, New York, US; T.S.**
**DURRANI et al.: "Theory of LDV tracking**
**systems"**

Courier Press, Leamington Spa, England.

**Description**

This invention relates to a sensor for sensing the ground speed of a vehicle, such as an agricultural vehicle, as set forth in the introductory part of claim 1.

Doppler-type ground speed sensing systems are well known, for example from German patent DE—A—3017480. This document discloses a sensor to be carried by a vehicle and comprising a transmitter and a receiver, the Doppler shifted frequency of the received signal being used to generate an output signal dependent on the vehicle speed.

In conventional sensors the velocity, v, can be determined from frequency shift, $\Delta f$, by a modified Doppler equation:

$$v = c \, (\Delta f/2f(t)) \sec \alpha$$

where C is the signal or wave propagation speed, where $\alpha$ is the angle of the transmission axis from horizontal, and where f(t) is the transmitted signal frequency. Conventional Doppler radar systems include a homodyne detector which mixes the transmitted signal with the received signal, thereby producing a frequency which is proportional to the absolute value of the difference between the transmit and receive frequencies. With such systems, it is impossible to distinguish between forward and backward motion. Furthermore, at low speeds, fluctuations due to waving of grass or vehicle pitching can cause the average indicated speed to be greater than the average actual speed. Another problem with homodyne-type systems is that the response time of the output is proportional to ground speed (frequency shift). At low vehicle speeds, this slow response time may cause inaccuracies. Finally, such a system may yield ambiguous information because a zero frequency output signal from the receiver may be the result of zero ground speed, or it could be the result of a signal "dropout" condition.

An object of the present invention is to provide a speed sensing system which can sense both the direction and magnitude of the speed of a vehicle and which has no ambiguity with respect to zero speed and signal dropout.

A further object is to provide a speed sensing system which has a response time which is independent of vehicle speed.

The sensor according to the present invention is characterized in the manner set forth in claim 1.

The cross-talk signal component of the received signal derived from the transmitted signal is substantially reduced by the circuit for producing an attenuated and phase-shifted replica of the transmitted signal, the operational principle of which is disclosed in U.S. patent US—A—4713665.

At zero speed, the receiver output frequency is equal to the transmit frequency. Because the reflected frequency is directly detected, the zero speed situation can be distinguished from the signal dropout situation where there is no receiver output. The signal processing circuit can include a phase-locked loop circuit which receives the pure reflected frequency and which generates an output voltage with an amplitude and sign corresponding to the amplitude and sign of the difference derived by subtracting the constant frequency from the reflected frequency. The output voltage thus provides an indication of the speed and direction (forwards or backwards) of the vehicle motion.

The invention will be described in more detail, by way of example, with reference to the accompanying drawings, in which:

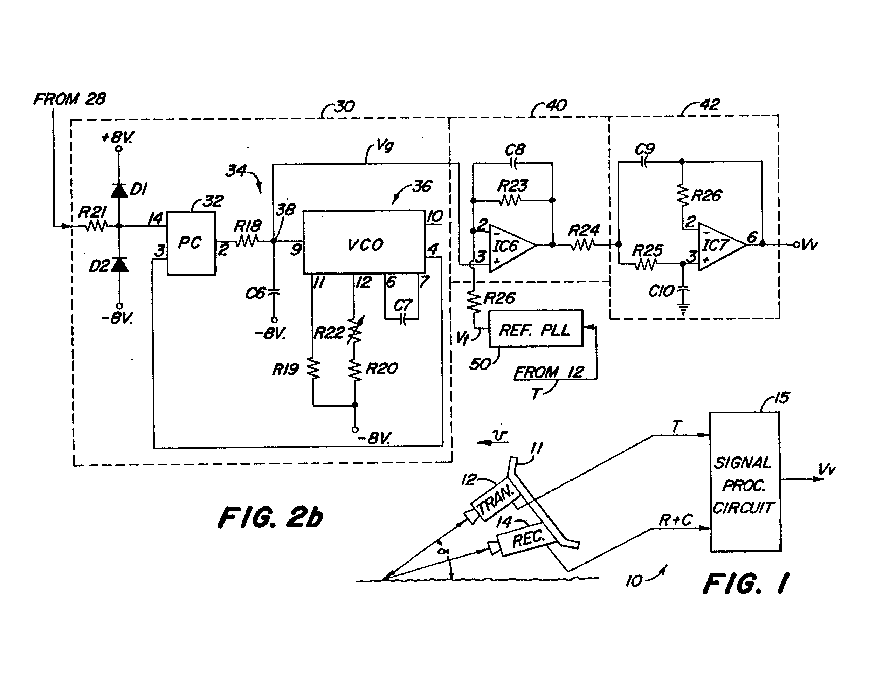

Fig. 1 is a schematic diagram of a Doppler ground speed sensor.

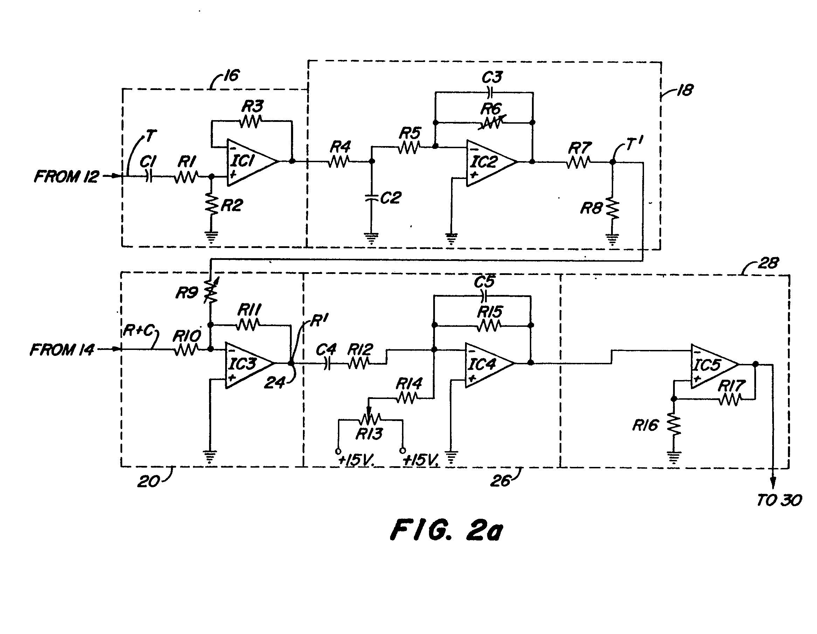

Figs 2a and 2b are schematic diagrams of the signal processing circuit of an embodiment of the invention.

The ground speed sensing system 10 for mounting on a vehicle lower frame member 11 includes a conventional ultrasonic (generally 20—200 kHz) transmitter 12, such as which continuously transmits an ultrasonic signal, T, at a preferred transmit frequency, f(t), of 40 kHz. The system also includes a conventional ultrasonic receiver 14. One such transmitter and receiver is available from the Southwest Research Institute and is described in SAE Paper 790510 by Gorfs and Benson. However, an equivalent transmitter and receiver would also suffice. The receiver 14 receives reflected ultrasonic signals, R, with frequency f(r), which are reflected from the terrain over which the vehicle travels. If the transmitter 12 and receiver 14 are aimed towards the ground in the forward direction with respect to vehicle motion, then the reflected signal, R, will have a reflected frequency, f(r), which will be higher than f(t) if the vehicle and system 10 are moving forward. Conversely, f(r) will be lower than f(t) if the vehicle and system 10 are moving in reverse. In actuality, the output of the receiver will contain an f(r) component and a "cross talk" component "C" with frequency f(t) due to cross talk between the transmitter 12 and the receiver 14.

A signal processing circuit 15 includes a buffer 16 which receives the transmit signal, T, from a pre-amp (not shown) of the transmitter 12. Buffer 16 includes a capacitor Cl, three identical resistors, R1, R2 and R3 and an integrated circuit operational amplifier ICI.

The output of buffer 16 is coupled to an attenuation and phase-shift circuit 18. Circuit 18 includes resistors R4 and R5, capacitor C2, an op-amp, IC2, feedback capacitor C3, variable phase-adjust resistor R6 and voltage divider resistors R7 and R8. Circuit 18 attenuates and phase shifts the transmit signal, T, and provides a phase-shifted and attenuated output, T'.

The T' signal is applied to a variable (amplitude adjusting) resistor R9 of summing circuit 20. Summing

2

circuit 20 also includes resistors R10 and R11 and op-amp IC3. Resistor R10 receives the output (R + C) of receiver 14 so that the receiver output can be superimposed on the T' signal. Preferably, the phase and amplitude of T' is such that it just cancels out the cross talk component C of the receiver output, leaving a voltage at 24 which is an amplified signal, R', having a substantially pure reflected frequency, f(r).

This signal R' with the pure reflected frequency, f(r), is received by a low pass filter and amplifier circuit 26. Circuit 26 includes capacitors C4 and C5, a comparator input, bias adjust potentiometer R13, resistors R12, R14 and R15 and an op-amp IC4.

The output of circuit 26 is received by a comparator circuit 28 which includes an op-amp, IC5, and resistors R16 and R17. This is essentially a "squaring" circuit with hysteresis to eliminate low level noise.

The output of circuit 28 is received by a phase-locked-loop (PLL) circuit 30. PLL circuit 30 includes a resistor R21, a pair of diodes D1 and D23, a phase comparator (PC) 32, a low pass filter 34, (including resistor R18 and a capacitor C6) and a voltage controlled oscillator (VCO) 36. The VCO 36 preferably inlcudes resistors R19 and R20, variable resistor R22 and capacitor C7 and is powered by +8 and −8 volts. The PLL 30 provides a voltage, Vg, at 38, which has a magnitude and sign corresponding to the magnitude and sign of the difference:

$$f(r) - f \text{ constant,}$$

where f constant will be equal to f(t) neglecting drift in f(t) and in other frequency-determining components of the PLL. As an alternative to a PLL, a slope detector with a low pass filter characteristic could be used instead.

This difference is, in turn, proportional to the ground speed of the vehicle (not shown). Preferably, the voltage, Vg, is conditioned by a buffer amplifier 40 which includes a capacitor C8, resistors R23 and R24 and a op-amp IC6. finally, the voltage, Vg, is conditioned by a noise-limiting, 2-pole, low pass filter circuit 42. Circuit 42 includes resistors R25 and R26, capacitors C9 and C10 and an op-amp IC7. Preferably, filter circuit 42 has a break frequency of 10 Hz and a damping factor of .71. This provides, at 44, an output voltage, Vv, with a mangitude representing the speed of the vehicle and with a sign representing the direction of vehicle travel (forward or reverse). Of course, by providing an offset level, then the direction information could be represented by whether the output voltage is above or below the offset level, not by whether it is positive or negative.

An additional or reference PLL 50 is identical to PLL 30. This reference PLL 50 receives the transmit signal T from transmitter 12 and provides a reference output voltage Vt which is proportional to f(t), less a constant. This reference voltage Vt would be coupled to the (−) input of IC6 via a resistor R26. In this manner, drift in the transmit frequency or in the PLLs 30 and 50 is cancelled and the voltage Vv is relatively uneffected by component drift.

Suggested component values for the circuit 15 are listed in the following table:

3

### Capacitors

| | |
|---|---|
| C1 | .0015 mF |
| C2, C7 | .001 mF |
| C3, C5 | 100 pF |
| C4, C10 | 1 mF |
| C8 | 47 pF |
| C9 | 3 mF |
| C6 | .01 mF |

### Resistors (Ohm)

| | |
|---|---|
| R1, R2, R3 | 1M |
| R4 | 3.9 k |
| R5 | 75 k |
| R7, R14, R17 | 100 k |
| R8, R21 | 10 k |
| R10, R16 | 2.2 k |
| R11, R26 | 22 k |
| R12 | 2 k |
| R15 | 39 k |
| R18 | 6.8 k |
| R19 | 390 k |
| R20 | 62 k |
| R23, R26 | 68 k |
| R24 | 18 k |
| R25 | 4.7 k |
| R6, R9 | Variable 0 - 100 k |
| R16, R13 | 25 k potentiometer |
| R22 | Variable 0 - 10 k |

### Diodes

| | |
|---|---|
| D1, D2 | IN914 |

### ICs

| | |
|---|---|
| IC1 - 5 | LF 356 (Motorola or equiv.) |
| PL(32), VCO(36) | CD 4046 (RCA or equiv.) |
| IC6, 7 | MC 34001 (Motorola). |

## Claims

1. A Doppler ground speed sensor for mounting on a vehicle, comprising a transmitter (12) for transmitting a signal with a given transmit frequency, a receiver (14) for receiving a reflected signal having a shifted frequency dependent on the speed and direction of movement of the vehicle, and a processing circuit (15) responsive to the received signal to provide an output voltage (Vv) representing the speed of the vehicle, characterized by a circuit (18) for producing an attenuated and phase-shifted replica of the transmitted signal, means (R9, R10) for combining the received signal and the replica signal so as to cancel a transmitted signal cross-talk component in the received signal, thereby to provide an unmixed signal with substantially the pure reflected frequency, and in that the processing circuit (15) comprises a first circuit (30) for generating a first voltage (Vg) proportional to the frequency of the received signal (f(r)), a second

4

circuit (50) for generating a second voltage (Vt) proportional to the transmit frequency (f(t)) and a difference circuit (40) for receiving the first and second voltages (Vg, Vt) and generating an output voltage (Vv) of magnitude proportional to the difference between the received signal frequency and the transmit frequency, whereby the ouptut voltge (Vv) indicates both the speed and, by its sign, the direction of movement of the vehicle, the first and second circuits (30, 50) having similar components so that the output signal (Vv) is substantially independent of component drift.

2. A speed sensor according to claim 1, characterized in that the transmitter (12) continuously transmits the transmit frequency.

3. A speed sensor according to claim 1 or 2, characterized in that the combining means comprises a summing amplifier (IC3), a first input resistor (R9) for the replica signal and a second input resistor (R10) for the received signal, the first input resistor being a variable resistor for amplitude adjustment of the replica signal.

4. A speed sensor according to claim 3, characterized by a low-pass filter (26) having an input coupled to the output of the summing amplifier (IC3), a squaring circuit (28) having an input coupled to the output of the low pass filter and an output coupled to the processing circuit (30).

5. A speed sensor according to any of claims 1 to 14, characterized by a low pass filter (42) for eliminating noise from the output voltage (Vv).

6. A speed sensor according to any of claims 1 to 5, characterized in that the first circuit (30) comprises a phase-locked loop.

7. A speed sensor according to any of claims 1 to 6, characterized in that the transmitted and reflected signals are ultrasonic signals.

**Patentansprüche**

1. Nach dem Dopplerprinzip arbeitender Bodengeschwindigkeitsmesser zur Montage an einem Fahrzeug, welcher einen Sender (12) zum Aussenden eines Signals mit einer vorgegebenen Sendefrequenz, einen Empfänger (14) zum Empfangen eines reflektierten Signals, das eine in Abhängigkeit von der Geschwindigkeit und Bewegungsrichtung des Fahrzeuges verschobene Frequenz aufweist, und einen Verarbeitungskreis (15) umfaßt, der auf das embfangene Signal anspricht, um eine Ausgangsspannung (Vv) zu liefern, welche die Geschwindigkeit des Fahrzeuges repräsentiert, gekennzeichnet durch einen Kreis (18) zum Erzeugen eines gedämpften und phasenverschobenen Abbildes des gesendeten Signals, durch Mittel (R9, R10) zum Kombinieren des embfangenen und des abgebildeten Signals, um so eine Nebensprechkomponente des gesendeten Signals in dem empfangenen Signal zu löschen und dadurch ein ungemischtes Signal mit im wesentlichen der reinen reflektierten Frequenz zu erhalten, und daß der Verarbeitungskreis (15) einen ersten Kreis (30) zum Erzeugen einer Spannung (Vg), proportional der Frequenz des empfangenen Signals (f(v)); einen zweiten Kreis (50) zum Erzeugen einer zweiten spannung (Vt), proportional der Sendefrequenz (f(t)) sowie einen Differenzkreis (40) umfaßt, um die erste und zweite Spannung (Vg, Vt) zu empfangen und eine Ausgangsspannung (Vv) von einer Größe zu erzeugen, die der Differnz zwischen der Empfangssignalfrequenz und der Sendefrequenz ist, wodurch die Ausgangsspannung (Vv) sowohl die Geschwindigkeit als auch — durch ihr Vorzeichen — die Bewegungsrichtung des Frahrzeuges anzeigt, wobei die ersten und zweiten Kreise (30, 50) ähnliche Komponenten aufweisen, so daß das Ausgangssignal (Vv) im wesentlichen unabhängig von einem Komponentendrift ist.

2. Geschwindkeitsmesser nach Anspruch 1, dadurch gekennzeichnet, daß die Sender (12) kontinuierlich die Sendefrequenz aussendet.

3. Geschwindkeitsmesser nach Anspruch 1 oder 2, dadurch gekennzeichnet, daß die Kombinierungsmittel einen Aufsummierverstärker (IC3), einen ersten Eingangswiderstand (R9) für das abgebildete Signal und einen zweiten Eingangswiderstand (R10) für das empfangene Signal aufweist, wobei der erste Eingangswiderstand ein variabler Widerstand zur Einstellung der Amplitude des Abbildungssignals ist.

4. Geschwindkeitsmesser nach Anspruch 3, gekennzeichnet durch einen Tiefpaßfilter (26) mit einem Eingang, der mit dem Ausgang des Aufsummierverstärkers (IC3) gekuppelt ist und durch einen Rechteckwellenkreis (28), der einen mit dem Ausgang des Tiefpaßfilters gekuppelten Eingang und einen mit dem Verarbeitungskreis (30) gekuppelten Ausgang aufweist.

5. Geschwindigkeitsmesser nach irgendeinem der Ansprüche 1 bis 4, gekennzeichnet durch einen Tiefpaßfilter (42) zum Eliminieren von Geräuschsignalen aus der Ausgangsspannung (Vv).

6. Geschwindigkeitsmesser nach irgendeinem der Ansprüche 1 bis 5, dadurch gekennzeichnet, daß der erste Kreis (30) ein phasenverriegelte Schleife aufweist.

7. Geschwindigkeitsmesser nach irgendeinem der Ansprüche 1 bis 6, dadurch gekennzeichnet, daß die gesendeten und reflektierten Signale Ultraschallsignale sind.

**Revendications**

1. Capteur de vitesse au sol par effet Doppler pour montage sur un véhicule, comprenant un émetteur (12) pour émettre un signal de fréquence d'émission donnée, un récepteur (14) pour recevoir un signal réfléchi ayant une fréquence décalée qui dépend de la vitesse et du sens de déplacement du véhicule, et un circuit de traitement (15) qui répond au signal reçu de manière à fournir une tension de sortie (Vv) représentant la vitesse du véhicule, caractérisé en ce qu'il comprend un circuit (18) de production d'une réplique atténuée et déphasée du signal émise, des moyens (R9, R10) de combinaison du signal reçu et du signal de réplique de façon à annuler une composante d'interférence du signal émis dans le signal reçu, ce qui fournit un signal non mélangé ayant sensiblement la fréquence réfléchie pure, et en ce que le circuit de traitement (15) comprend un premier circuit (30) pour engendrer une première tension (Vg) proportionnelle à la fréquence du signal reçu (f(r)), un deuxième circuit (50) pour engendrer une deuxième tension (Vt) proportionnelle à la fréquence d'émission (f(t)), et un circuit de différence (40) pour recevoir les première et deuxième tensions (Vg, Vt) et engendrer une tension de sortie (Vv) de grandeur proportionnelle à la différence entre la fréquence du signal reçu et la fréquence d'émission, de sorte que la tension de sortie (Vv) indique à la fois la vitesse et, par son signe, le sens de déplacement du véhicule, les premier et deuxième circuits (30, 50) ayant des composants similaires de sorte que le signal de sortie (Vv) est sensiblement indépendament d'une dérive des composants.

2. Capteur de vitesse suivant la revendication 1, caractérisé en ce que l'émetteur (12) émet continuellement la fréquence d'émission.

3. Capteur de vitesse suivant la revendication 1 ou 2, caractérisé en ce que les moyens de combinaison comprennent un amplificateur d'additon (IC3), une première résistance d'entrée (R9) pour le signal de réplique et une deuxième résistance d'entrée (R10) pour le signal reçu, la première résistance d'entrée étant une résistance variable pour l'ajustement d'amplitude du signal de réplique.

4. Capteur de vitesse suivant la revendication 3, caractérisé en ce qu'il comprend un filtre passe-bas (26) ayant une entrée reliée à la sortie de l'amplificateur d'addition (IC3), une circuit de conformation (28) ayant une entrée reliée à la sortie du filtre passe-bas et une sortie reliée au circuit de traitement (30).

5. Capteur de vitesse suivant l'une quelconque des revendications 1 à 4, caractérisé en ce qu'il comprend un filtre passe-bas (42) pour éliminer le bruit de la tension de sortie (Vv).

6. Capteur de vitesse suivant l'une quelconque des revendications 1 à 5, caractérisé en ce que le premier circuit (30) comprend une boucle à blocage de phase.

7. Capteur de vitesse suivant l'une quelconque des revendications 1 à 7, caractérisé en ce que les signaux émis et réfléchis sont des signaux d'ultrasons.

6

FROM 28

FIG. 2b

FIG. 1

EP 0 162 646 B1

FIG. 2a